# EUROPEAN PATENT APPLICATION

(11) **EP 2 383 655 A1**
(43) Date of publication of application: **02.11.2011**
(21) Application number: 09839174.1
(22) Date of filing: 29.01.2009
(51) Int. Cl.: G06F 13/00, H04L 9/34, H04L 12/56

(54) **INFORMATION PROCESSOR AND COMMUNICATION CONTROL METHOD FOR THE SAME**

(71) Applicant: Suginaka, Junko, Tokyo 105-0001 (JP)
(72) Inventor: FURUKAWA, Yoshihisa, Tokyo 102-0094 (JP); SUGINAKA, Junko, Tokyo 105-0001 (JP)
(74) Representative: Müller - Hoffmann & Partner
(86) International application number: PCT/JP2009/051450
(87) International publication number: WO 2010/086982

(57) **Abstract**

The present invention divides a file into a plurality of section data sets, each section data set having a predetermined data amount less than one-packet data amount, allocates the section data sets to the networks according to a predetermined rule, connects in series the section data sets allocated to each network as a section file, dividing the section file into a plurality of packets, and setting, in a predetermined region of each packet, packet identification information associated with the transmission object file, sets information specifying the network in a predetermined region of each packet; and sends each packet to a local communication line.

## Description

### Technical Field

The present invention relates to an information processor for transmitting and receiving a file from other information processor through a selected one or more of various types of networks, and a method of controlling communication of the same.

### Background Art

WO 2006/064552 A1 proposes a network connection service provider device that is able to selectively connect the Internet and a private network (dedicated network) via a router. This device can set and register a special access authority to the dedicated network. The device has a switching control for an access request from a communication terminal as follows. On receipt of an access request from a communication terminal having an address with the registered access authority, the device relays the terminal to the dedicated network. On receipt of an access request from a communication terminal having an address without the registered access authority, the device relays the terminal to the Internet. The device can thus improve security for information transmitted and received over the dedicated network. Particularly, if a financial institution server is connected to the dedicated network, electronic payment to the server can be done under higher security over the dedicated network than over the Internet. The document WO 2006/064552 A1 does not discuss, however, an idea that a plurality of packets forming a file are allocated and transmitted to the networks.

Japanese published unexamined application 11-136290 discloses that when a transmitting end LAN transmits packets to a receiving end LAN, the transmitting end LAN is connected to a transmitting end router and the receiving end LAN is connected to a receiving end router, and both routers are opposed and connected via a plurality of lines such as a wide area network (WAN). Thus, the packets directed from the transmitting end LAN to the receiving end LAN are allocated to the lines by a predetermined load distribution algorithm in the transmitting end router. Load distribution can thus be performed. For example, for three lines, distribution of 3 : 2 : 1 or 3 : 2 : 0 ratio is performed. Unfortunately, the document 11-136290 only determines the distribution ratio (line speed or transmission ratio) according to a load distribution table, and does not have an idea of security measures nor disclose a method of distributing packets for improving file security.

### Disclosure of Invention

### Problems to be Solved by the Invention

An object of the present invention is to provide an information processor for dividing a series of data sets itself forming a file into a plurality of section data sets, and allocating the transmission lines of the section data sets to a plurality of networks, thereby improving security against information leakage, and a method of controlling communication of the same.

### Means for Solving Problem

The present invention provides an information processor for transmitting packets forming a file sent to a local communication line to a destination information processor through a selected one or more of a plurality of networks, the information processor including: a transmission instruction unit for instructing a transmission of a transmission object file to a specified destination; a section data set creation unit for dividing the file instructed to be transmitted into a plurality of section data sets, each section data set having a predetermined data amount less than one-packet data amount; an allocation unit for allocating the section data sets to the networks according to a predetermined rule; a packet creation unit for connecting in series the section data sets allocated to each network, dividing the connected data sets into a plurality of packets, and setting, in a predetermined region of each packet, packet identification information associated with the transmission object file; a network setting unit for setting, in a predetermined region of each packet, information specifying the network allocated by the allocation unit; and a transmission process unit for sending each packet having the network-specifying information set therein to the local communication line.

The present invention also provides a method of controlling communication of an information processor for transmitting packets forming a file sent to a local communication line to a destination information processor through a selected one or more of a plurality of networks, the method including: a transmission instruction step for instructing a transmission of a transmission object file to a specified destination; a section data set creation step for dividing the file instructed to be transmitted into a plurality of section data sets, each section data set having a predetermined data amount less than one-packet data amount; an allocation step for allocating the section data sets to the networks according to a predetermined rule; a packet creation step for connecting in series the section data sets allocated to each network, dividing the connected data sets into a plurality of packets, and setting, in a predetermined region of each packet, packet identification information associated with the transmission object file; a network setting step for setting, in a predetermined region of each packet, information specifying the network allocated by the allocation step; and a transmission process step for sending each packet having the network-specifying information set therein to the local communication line.

According to the invention, the source and destination information processors are adapted to be connectable to a plurality of networks, the source information processor transmits a file to the destination information processor through a local communication line and through a selected one or more of a plurality of networks. When transmission of the transmission object file to a specified destination is instructed, the file instructed to be transmitted is divided into a plurality of section data sets, each section data set having a predetermined data amount less than one-packet data amount. Each section data set size may correspond on a one-to-one basis to, or may be larger than, each data set size in the file. Each section data set size is at least smaller than the packet data set size. This prevents as much as possible information from being made partially decodable by only one packet. The section data sets are then allocated to the networks according to a predetermined rule. The section data sets allocated to each network are connected in series, and the connected section data sets, i.e., a series of section data sets are divided into a plurality of packets, and packet identification information associated with the transmission object file is set in a predetermined region of each packet. Information specifying the network allocated is set in a predetermined region of each packet. The information may be the route information itself or be in the description format of an IP address. The packets having the network-specifying information set therein are sent to the local communication line, and passed through the set network, and received by the destination information processor. Other packets having information specifying different networks set therein are sent to the local communication line, and passed through the set different networks, and received by the same information processor.

The present invention also includes a receipt process unit for receiving packets from the networks, and a rearrangement unit for rearranging the packets into the original one file according to the network-specifying information set in the predetermined region of each received packet and the predetermined rule.

The present invention also includes a receipt process step for receiving packets from the networks, and a rearrangement step for rearranging the packets into the original one file according to the network-specifying information set in the predetermined region of each received packet and the predetermined rule.

According to the invention, when the information processor functions as the receiving end, the packets are received from a plurality of networks, and the network-specifying information set in the predetermined region of each received packet and the predetermined rule for the allocation are used (i.e., the process is performed in the reverse direction) to rearrange the packets into the original one file, i.e., the original file is reproduced.

### Effects of the Invention

According to the invention, a series of data sets forming a file is itself divided into section data sets, and the transmission lines of the section data sets are allocated to a plurality of networks, thus improving security against information leakage.

The receiving end may perform the rearrangement process to reproduce the original file.

### Brief Description of the Drawings

FIG. 1 is an entire schematic configuration diagram of a network system, such as an electronic payment support system, having a plurality of networks, as an example in which an information processor according to an embodiment of the present invention may be applied.
FIG. 2A illustrates a basic process flow for better understanding the contents according to one embodiment of the present invention, showing the transition from a file division process, through an allocation process, to a packetization process at the source end. FIG. 2B illustrates a basic process flow for better understanding the contents according to one embodiment of the present invention, showing a packet flow over the networks.
FIG. 3 is a block diagram of an information processing portion 120 and a storage portion 123 of an information processor 12.
FIG. 4 is a flowchart of a procedure of a transmission process I performed by a CPU of the information processing portion 120.
FIG. 5 is a flowchart of a procedure of a transmission process II performed by the CPU of the information processing portion 120.
FIG. 6 is a flowchart of a procedure of a receipt process performed by the CPU of the information processing portion 120.

### Explanation of Reference Numbers

- 1: network system
- 10, 20: information processing terminal portion
- 12, 22: information processor
- 120, 220: information processing portion
- 120a: image display process portion
- 120b: file creation portion
- 120c: transmission instruction portion
- 120d: section data set creation portion
- 120e: allocation portion
- 120f 120d: packet creation portion
- 120g 120f: network setting portion
- 120h: transmission process portion
- 120i: receipt process portion
- 120j: rearrangement process portion
- 121, 221: monitor
- 122, 222: input portion
- 123, 223: storage portion
- 13, 23: carrier (local communication line)
- 14,141, 142, 24, 241, 242: ISP
- F: file
- D1 to D3: data set
- F1, F2: section file
- d1 to d6: section data set
- F1p, F2p: transmission file
- P11 to P1p, P21 to P2m: packet

### Best Mode for Carrying Out the Invention

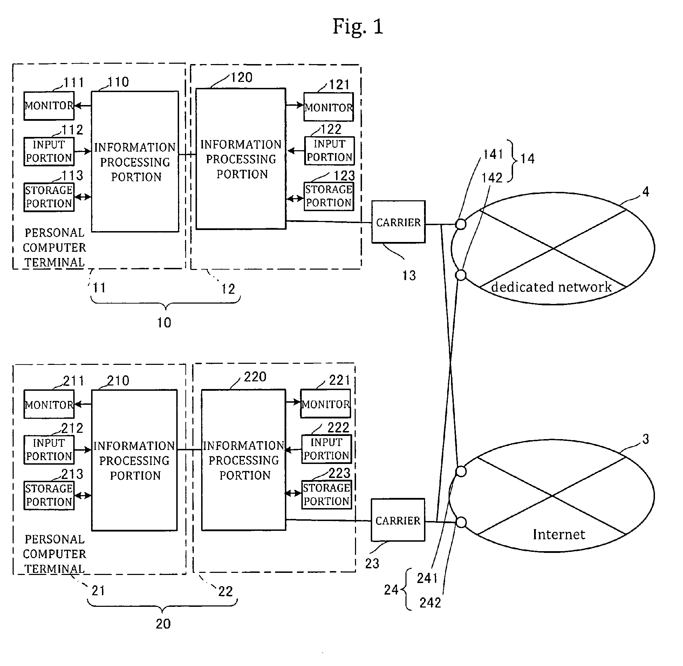

FIG. 1 is an entire schematic configuration diagram of a network system, such as an electronic payment support system, having a plurality of networks, as an example in which an information processor according to an embodiment of the present invention may be applied. The network system shown in FIG. 1 includes a plurality of networks such as the Internet and a dedicated network different from the Internet. The dedicated network is released to predetermined members. The dedicated network may support applications such as electronic payment betweenmembers registered in an established group. For example, the dedicated network allows for electronic transmission and receipt processes of various types of documents based on electronic documents (files) related to payment in the general commerce such as issue and receipt of a bill from a dealer's store, an instruction of adding money (i.e., payment) from the consumer to an account of a contract financial institution of the bill issuer, issue of the receipt, and payment of public utility charges or the like. Note that although this embodiment will be described with respect to a text-format data file, it is also applicable to a binary-format data file.

With reference to FIG. 1, the network system 1 includes an information processing terminal portion 10. The terminal portion 10 includes a personal computer (a personal computer terminal) 11 and an information processor 12. The processor 12 works as a device, such as a modem, that includes a router and header processing function. The information processor 12 also includes a predetermined (for example, an electronic payment related) information processing function. The network system 1 also includes a communication line facility (carrier) 13. The carrier 13 includes a router for sending a packet to a network according to an IP address set in a header region of the packet, as described below. The system 1 also includes providers (ISP) 141 and 142 that are connected to the carrier 13. The ISP 141 and 142 each include a server (buffer) and a router. The network system 1 also includes the Internet 3 and a dedicated network 4 that are connected in parallel with the carrier 13. Note that the carrier 13 is adapted to be connectable to the dedicated network 4 via the ISP 141 and connectable to the Internet 3 via an ISP 241 as described below.

A plurality of information processing terminal portions is connected to the Internet 3 and the dedicated network 4. As their representatives, FIG. 1 shows the information processing terminal portion 10 and an information processing terminal portion 20. The information processing terminal portion 20 has a configuration similar to that of the information processing terminal portion 10. Specifically, the information processing terminal portion 20 includes a personal computer terminal 21 and an information processor 22. A carrier 23 is adapted to interface between the information processing terminal portion 20 and the ISPs 242 and 142. The carrier 23 is adapted to be connectable to the dedicated network 4 via the ISP 142 and connectable to the Internet 3 via an ISP 242.

Note that although FIG. 1 shows a general aspect in which the set of ISPs 141 and 142 and the set of ISPs 241 and 242 work independently, a different aspect may also be possible in which the set of ISPs 141 and 142 and the set of ISPs 241 and 242 are each connected to both Internet 3 and dedicated network 4. The present invention is applicable to both aspects. In addition, the set of ISPs 141 and 142 and the set of ISPs 241 and 242 may be the same with respect to the carriers 13 and 23.

The dedicated network 4 is a network system different from the Internet 3. As described above, only a consumer, a store, a company, and a financial institution that are members of an established group may be provided with an authority (access right) for connecting to the dedicated network 4. Any member may thus give and receive an electronic file for the electronic payment or the like from other members through the Internet 3 as well as the dedicated network 4. A non-member, who does not have the information processor 10 or 20, but only the general personal computer, may connect to the Internet 3, but not to the dedicated network 4 (not provided with the authority for connecting to it).

As the personal computer terminals 11 and 21 have the same structure, only the personal computer terminal 11 will be described below. The personal computer terminal 11 may be any type well known in the art. The personal computer terminal 11 includes an information processing portion 110 including a central processing unit (CPU), a monitor 111 for displaying various types of images, an input portion 112 including an operating member such as a keyboard, a mouse, and the like for various types of operation instructions and information inputs, and a storage portion 113 for storing various types of created file data, an OS program, and application programs. The personal computer terminal 11 is adapted to have a global IP address set therein to be communicatable with other personal computer terminal 21 via the Internet 3. Note that, of the personal computer terminals connected to the Internet 3, terminals such as the information processing terminal portions 10 and 20 that include the information processors 12 and 22 are adapted to be able to transmit a file created by the personal computer terminals 11 and 21 using an application program included in the information processors 12 and 22 to the Internet 3 as well as the dedicated network 4.

As the information processors 12 and 22 have the same structure, only the information processor 12 will be described below. The information processor 12 has a housing of a predetermined shape such as a rectangular shape. The processor 12 contains a modulator and a demodulator (not shown) for performing the original modem function. The information processor 12 also includes, in a proper position on the surface, an input/output wiring terminal for connecting to the carrier 13 via a local communication line. The modulator is adapted to modulate a file created by the personal computer terminal 11 and the information processor 12 into a signal format transmittable to the Internet 3 and the dedicated network 4. The demodulator is adapted to demodulate a file received via the Internet 3 and the dedicated network 4 into a signal format processable by the personal computer terminal 11 and the information processor 12.

The information processor 12 includes an information processing portion 120 including a central processing unit (CPU), a monitor 121 for displaying an image, the monitor 121 including a liquid crystal panel or a plasma display panel in a proper position on the surface, an input portion 122 including a touch panel overlaid on the monitor 121 or a general operation key, and a storage portion 123 for storing various types of data information or the like. The touch panel may include a well-known electrical, ultrasonic, and optical types, as well as a type using a pressure-sensitive element. The storage portion 123, which will be described in more detail below, previously stores the display positions of the images displayed on the monitor 121 associated with the coordinates of the pressing operation positions on the touch panel. Which one of the images displayed on the monitor 121 is selected may thus be identified from information of the detected pressing position.

The storage portion 123 is adapted to store (including external installation), in a ROM portion, a processing program (an OS program, an application program) for various types of operations, as well as various types of written forms and format data or the like. The storage portion 123 is also adapted to store, in a RAM portion, a transmitted or received file related to electronic payment or the like. The information processing portion 120 is adapted to perform various processes including a support process of creation of information (file) such as a required document and image, a data store process, a file transmittance and receipt process, and a process described below for packets forming a file.

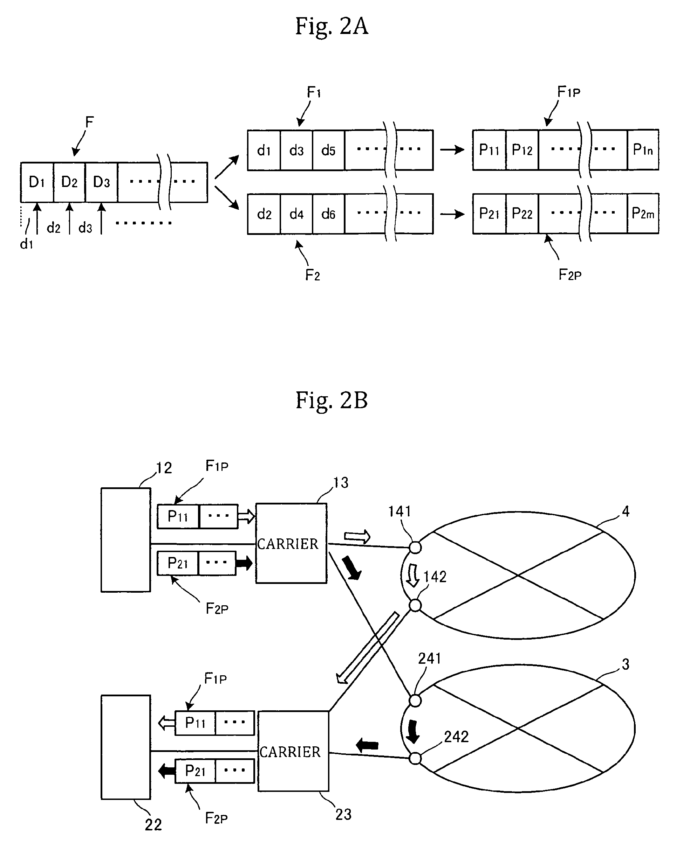

FIG. 2A and FIG. 2B illustrate a basic process flow for better understanding the contents according to one embodiment of the present invention. FIG. 2A shows the transition from a file section process, through an allocation process, to a packetization process at the source end. FIG. 2B shows a packet flow over the networks.

The information processor 12 creates a file F that uses, in this embodiment, a text data format expressed in a character code system including the JIS code, shift JIS code, and EUC code. The text data is data in which a bit pattern of 16 bits i.e., two bytes corresponding to one character or the like only has a bit pattern of the above character code.

With reference to FIG. 2A, the file F includes data sets D1, D2, and D3... arranged therein. Each data set has a predetermined bytes as described above. The section data sets d1, d2,... are new data sets created by dividing each of the data sets D1, D2, D3,... at a point in the middle of each bytes, respectively. When, for example, each data D has two bytes, the section data set d1 is created by dividing between the first byte and the second byte of the data set D1, and the section data set d2 is created by combining the second byte of the data D1 and the first byte of the data D2. The section data set d may or may not correspond to the data set D on a one-to-one basis. In this way, each data set loses its integrity. For example, a predetermined character code loses the code data set defining the character in question.

According to a predetermined allocation rule, the section data sets d1, d2,... are allocated to the number of network types, for example, two in this embodiment, the Internet 3 side and the dedicated network 4 side. The predetermined rule includes a rule in which at least continuous section data sets d are not allocated to the same network. Thus, for two networks such as the Internet 3 and the dedicated network 4 as in this embodiment, the section data sets are alternately allocated to the networks. Specifically, in this example, the odd-numbered section data sets d1, d3, and d5,... are allocated to the dedicated network 4, and the even-numbered section data sets d2 and d4,... are allocated the Internet 3, or vice versa. The section data sets d allocated to the Internet 3 are made continuous to provide a row of data series (section file F1). The section data sets d allocated to the dedicated network 4 are made continuous to provide another row of data series (section file F2).

Each of the section files F1 and F2 is then divided into a plurality of packets P. Each packet P includes frames, each frame having a predetermined data amount communicatable in a network. The section file F1 is divided into packets P11, P12,..., and P1n. The section file F2 is divided into packets P21, P22,..., and P2m. The packets P11, P12,..., and P1n provide a transmission file F1p. The packets P21, P22,..., and P2m provide a transmission file F2p.

A predetermined region of each packet P, such as a header region, has header information set therein, including at least route information specifying the transmission route, IP addresses and MAC addresses specifying the source and destination. Specifically, for communication through the Internet 3, a global IP address is set, and for communication through the dedicated network 4, a local IP address is set. The carrier 13 performs the physical setting of the route according to the IP address.

With reference to FIG. 2B, the packets are transmitted as follows. First, the packets P11, P12,..., and P1n are output to the carrier 13 in this order. The carrier 13 then outputs the packets to the dedicated network 4 side. The packets are then passed through the ISP 141 (and, in general, a different ISP such the ISP 142) and the carrier 23 connected to the information processor 22, and transmitted to and received by the information processor 22 (see the hollow arrows in FIG. 2B). Then, the packets P21, P22,..., and P2m are output to the carrier 13 in this order. The carrier 13 outputs the packets to the Internet 3 side. The packets are then passed through the ISP 241 (and, in general, a different ISP such as the ISP 242) and the carrier 23 connected to the information processor 22, and transmitted to and received by the information processor 22 (see the filled arrows in FIG. 2B).

The information processor 22 stores the predetermined allocation rule for allocation (or if the predetermined allocation rule is included in a signal or the like showing the number of packets, the signal being transmitted before each packet P is transmitted, or if the predetermined allocation rule is added in a portion of the header information of each packet P), and then the information processor 22 performs, according to the allocation rule, the rearrangement process in the reverse direction of the data transition shown in FIG. 2A to rearrange the packets into the original file F.

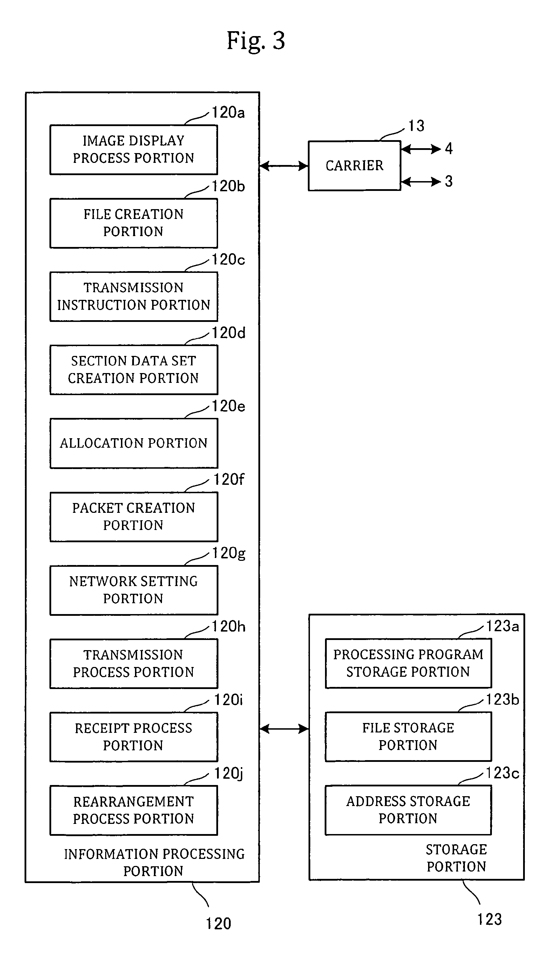

FIG. 3 is a block diagram of the information processing portion 120 and the storage portion 123 of the information processor 12. The CPU of the information processing portion 120 functions as the following components: an image display process portion 120a for performing a processing program stored in a processing program storage portion 123a to cause the monitor 121 to display an image; a file creation portion 120b for performing a creation process of a document or the like; a transmission instruction portion 120c for receiving the transmission instruction for the transmission object file to perform a predetermined process; a section data set creation portion 120d for creating a plurality of section data sets from the file instructed to be transmitted; an allocation portion 120e for allocating the section data sets to the networks; a packet creation portion 120f for dividing each allocated section file into packets; a network setting portion 120g for setting networks relaying the packets; a transmission process portion 120h for transmitting packets; a receipt process portion 120i for receiving packets sent back via the carrier 13; and a rearrangement process portion 120j for rearranging the received packets into the original file.

The processing program storage portion 123a stores various programs as applications, including a file creation process program, an allocation process program, a network setting program, a packet creation program, a packet transmission process program, a packet receipt process program, a rearrangement process program, and a file management process program. The file storage portion 123b stores form and format information for supporting creation of various types of files, and also stores a transmission file and a received file in different regions.

The image display process portion 120a is adapted to display contents on the monitor 121 according to a document being created and an instruction from the input portion 122 (for example, the transmission instruction).

The file creation portion 120b is adapted to create a file by reading the format information or the like previously stored in the file storage portion 123b, receiving an operation input from the input portion 122, and overwriting necessary information, or by inputting all information without using the format file.

The transmission instruction portion 120c is adapted to receive, when the input portion 122 issues a transmission instruction for the transmission object file, the transmission instruction to perform a series of processes for transmitting the transmission object file.

The section data set creation portion 120d is adapted to divide a series of data sets D forming the file F instructed to be transmitted into a plurality of section data sets d. Each data set D is sequentially divided at a predetermined position as shown by way of example in FIG. 2A, for example, at a predetermined position in the middle of the unit of a plurality of code defining each data set D. Thus, each data set D loses its integrity. Observation of the section data sets d themselves may not allow for the analysis of the original data sets D.

The allocation portion 120e is adapted to allocate, according to the predetermined allocation rule, a series of section data sets created by the section data set creation portion 120d to the number of network types, thus creating the section files. In this embodiment, as shown in FIG. 2A, the section files F1 and F2 associated with the Internet 3 and dedicated network 4 are created. The predetermined allocation rule is an allocation method under the condition that adjacent section data sets are not continuously allocated to the same network, as described with respect to FIG. 2A. For three or more networks, variously combined and more complicated allocation methods may be used. For example, under the condition that at least adjacent section data sets are not continuously allocated to the same network, the rule of using a random number generator or the like for the random allocation or a previously prepared rule may be used for the allocation. If the previously prepared rule is used, several rules may be prepared, and a predetermined selection method (including a random selection) may determine which rule is used for each transmission or depending on the time information (the data and time or the like).

The packet creation portion 120f is adapted to divide a series of section data sets forming each created section file into packets having a predetermined data amount, preferably the number of bytes defined by each network. In the example shown in FIG. 2A, the section files F1 and F2 are each divided into packets P. The section file F1 is divided into the packets P11, P12,..., and P1n. The section file F2 is divided into the packets P21, P22,..., and P2m.

Each packet includes, for example, a header region in the front region of the frame. The header region is added with header information including file and section file specification information, packet specification information (identification information: information defining the order of the packets forming one transmission file), the IP addresses and the MAC address of the source and destination. The IP addresses and the MAC address of the source and destination are stored in the address storage portion 123c. The portion 123c stores the IP address and MAC address that are set in the information processor of the member. Each packet includes specifically, a start frame, a media access control (MAC) header, an internet protocol (IP) header, a transmission control protocol (TCP) header, data portion, and a frame check sequence (FCS). Set in the MAC header is the MAC address defining the line between the source and the carrier 13. Set in the IP header is the IP addresses of the destination and source (a global IP address is set for communication through the Internet 3 and a local IP address is set for communication through the dedicated network). Note that although not shown in FIG. 1, address information of the member may be held in the storage portion 123 (the address storage portion 123c) of each information processor 12, or may be stored in a management server provided on the dedicated network 4 for improved security.

The network setting portion 120g is adapted to set, in the header region including each header portion, route information indicating the network used for the communication. Although the route information may be added in a predetermined position of the header region as independent information, in this embodiment, the route information is concurrently set by setting, in the IP address header, the global IP address for communication through the Internet 3, and the local IP address for communication through the dedicated network (for example, according to the address for the ethernet (registered trademark)).

These are set by a routing table and the Address Resolution Protocol (arp) table. The packets P are verified at the carrier 13 against the table, and are transmitted only to the route having the matched address, thus making it possible to switching the networks.

The transmission process portion 120h is adapted to output the file created in response to the operation from the input portion 122 (including a file that is already created and has been stored in the file storage portion 123b and is specified as a transmission object file) to the carrier 13 in the order of the packets. In the example shown in FIG. 2A, the packets are first output in the order of P11, P12,..., and P1n, and then output in the order of P21, P22,..., and P2m. Note that a series of processes from the section data set creation portion 120d to the network setting portion 120g, the processes being for the file instructed to be transmitted, will be started by the issue of the transmission instruction from the transmission process portion 120h.

The receipt process portion 120i is adapted to receive, when the information processor 12 functions as the receiving end, the packets sent via the carrier 13, and temporarily store them in a predetermined storage area (buffer) in the storage portion 123. Note that the transmission instruction portion 120c transmits to the receipt process portion 120i before the actual packet transmission, information about the number of packets created by the packet creation portion 120f or the like as a session signal, and the receipt process portion 120i has a function of using the information to determine whether all packets are received.

The rearrangement process portion 120j is adapted to extract the packet group included in the original one file according to the file specification information in the header regions of the packets stored in the buffer, and rearrange, according to the packet specification information, the extracted packets in the same packet order as the packets when they are created into the section files (see the transmission files F1p and F2p shown in FIG. 2A). The rearrangement process portion 120j also extracts, from the extracted packets of the transmission files, the data sets in their data areas to create the section files (the section files F1 and F2 show in FIG. 2A). In addition, the rearrangement process portion 120j extracts, from the extracted section files, the section data sets and rearrange them into the original series of section data sets (the procedure of creating the section data sets d1, d2,... of the file F from the files F1 and F2 in FIG. 2A). The rearrangement process portion 120j performs the above rearrangement processes to reproduce the original file F.

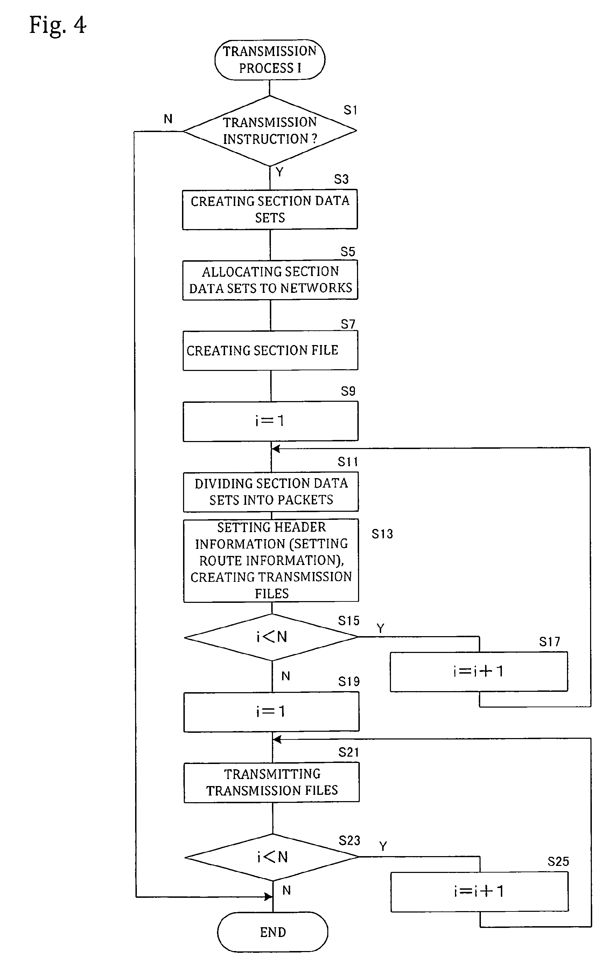

FIG. 4 is a flowchart of a procedure of a transmission process I performed by the CPU of the information processing portion 120. With reference to FIG. 4, the presence or absence of the transmission instruction is checked (step S1). If no transmission instruction, then the control exits the present flow. If the transmission instruction is present, then section data sets are created from a series of data sets forming the transmission object file (step S3). Then, the section data sets are allocated, according to a predetermined allocation rule, to the networks, here the Internet 3 and dedicated network 4 (step S5). The section data sets allocated to each network are rearranged into a series of section data sets as a section file (step S7).

. Then, i representing the number of networks is set to i = 1 (step S9). The section files allocated to the first network are divided into the packets (step S11). Then, header information is set in the header regions of the divided packets (step S13). Note that for example, for the networks of the Internet 3 and dedicated network 4, if the global IP address or local IP address is set as the destination and thus the route information is set at the same time in the IP header portion, the route information setting step may be omitted, and the process in step S13 may create the transmission file.

Then, it is determined whether the transmission files are created for all networks according to whether i < N (N: the number of networks) (step S15). If i < N, i = i + 1 is performed (step S17), then the next section file is subjected to the packet dividing process and the header information setting process. If the processes are completed for all networks, i.e., not i < N (No in step S15), then the transmission files corresponding to the respective networks are transmitted (step S19 or later).

In step S19, i representing the number of networks is set to i = 1, the transmission files corresponding to the first network is transmitted (step S21). Then, it is determined whether the transmission of the transmission files is completed for all networks according to whether i < N (N: the number of networks) (step S23). If i < N, i = i + 1 is performed (step S25), then the next transmission file is transmitted. If the packet transmission is completed for all networks (No in step S23), the present flow is ended.

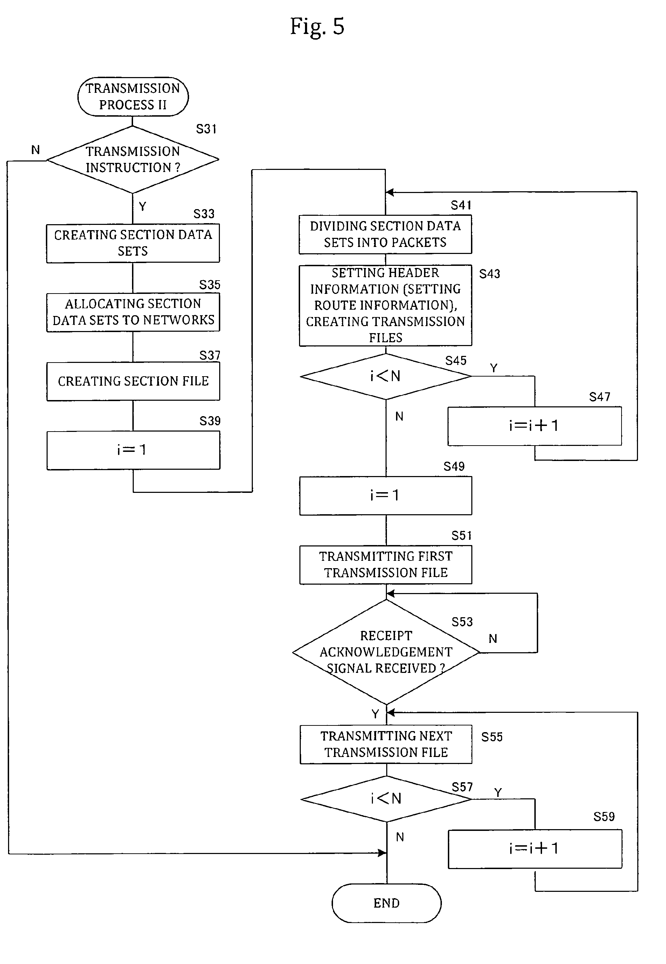

FIG. 5 is a flowchart of a procedure of a transmission process II performed by the CPU of the information processing portion 120. In FIG. 5, steps S31 to S49 are similar to steps S1 to S19 in FIG. 4, and their description is omitted here.

In step S51, the transmission file associated with the first network is transmitted. Then, after the transmission, the control is waiting until a receipt acknowledgement signal having the packet format is returned from the destination information processor 22 (step S53). If it is determined that the receipt acknowledgement signal is returned, the transmission file associated with the next network is transmitted (step S55). Then, it is determined whether the transmission of the associated transmission files is completed for all networks according to whether i < N (N: the number of networks) (step S57). If i < N, i = i + 1 is performed (step S59), then the next transmission file is transmitted. If all transmission processes are completed, the present flow is ended.

Note that although the receipt process portion 120i receives the receipt acknowledgement signal from each network, it may be sufficient in this embodiment to focus attention on the receipt acknowledgement signal returned in response to the transmission of the transmission file associated with the preset first specific network.

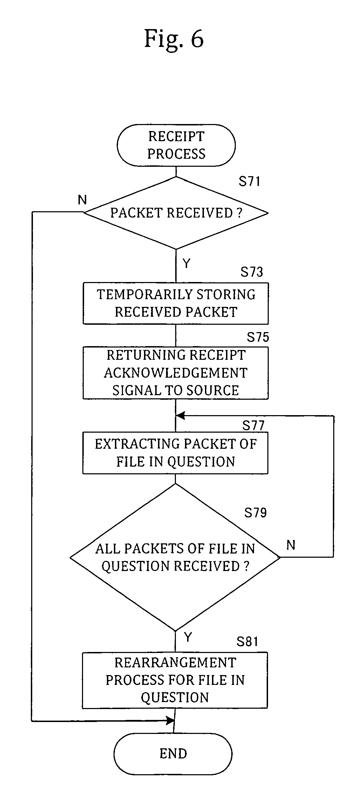

FIG. 6 is a flowchart of a procedure of a receipt process performed by the CPU of the information processing portion 120. FIG. 6 shows the receipt process corresponding to the transmission process II in FIG. 5. First, the receipt process portion 120i determines whether the packet included in the transmission file is received (step S71). If no packet is received, the control exits the present flow. If the packet is received, the received packet is temporarily stored in, for example, the file storage portion 223b of the storage portion 123 (step S73). Then, the source address information included in the header region of the received packet is extracted, and a receipt acknowledgement signal having the destination address set therein is created and sent toward the carrier 23 (step S75).

Then, the other packets forming the original one file (the file in question) via all other networks are extracted from information specifying the source and packets in the header regions of the received packets (step S77). Then, it is determined whether all packets of the file in question are received (step S79). If not, then the control is waiting until they are received. If it is determined that all packets are received, the packet specification information in the header regions of the packets are used to rearrange the packets in the same order as the packets forming the original file. Then the allocation rule is used to rearrange the section data sets in a series of data sets (step S81). When the rearrangement is completed, the file is incorporated in the file storage portion 223b. The incorporated file is displayed on the monitor 221 automatically, or in response to the operation from the input portion 222. The operator may thus view the file contents.

Note that step S75 may be omitted in the receipt process corresponding to the transmission process I shown in FIG. 4. Note that because the protocol states that the receipt acknowledgement signal be returned, both transmission I and II may be used as appropriate.

In this way, the data sets forming one file are divided, and the resulting section data sets are allocated to a plurality of networks and are transmitted through different communication lines at different time periods. Therefore, even if the packet is captured in any network, the file may not be reproduced, thereby blocking the leakage of secret. The section data sets allocated to one network do not include any section data sets that are adjacent in the original file, thereby blocking the leakage of secret more strongly even when partially seen.

Note that although in this embodiment, the section data sets adjacent in the original file are not allocated to the same network, in the present invention, even when the adjacent section data sets are allocated to the same network, one or more dummy section data sets may be interposed therebetween or the allocated section files may be shuffled (disturbed) (rearranged) according to a predetermined rule or the like, thus substantially losing the continuity between the section data sets. In this case, the insertion location information of the dummy section data sets or the shuffle rule information needs to be recognized by the receiving end. The information may be provided by previously storing it in the storage portion 223 or by including it in the session signal sent before the packet transmission.

Also in this embodiment, the information processor 12 is connected with the personal computer terminal 11 to allow the file created by the personal computer terminal 11 to be transmitted to the Internet 3 as well as the dedicated network 4 as necessary. This is made applicable to the creation and transmission of the file by the personal computer terminal 11 for the following reasons. First, the fact is taken into account that a person used to use the personal computer operation can create documents using the input portion 112 of the personal computer terminal 11 more efficiently and quickly than using the input portion 122 of the information processor 12. Second, considering the common (general) size of the information processor 12, if the monitor 121 does not necessarily have a large size screen, the required size monitor 111 of the personal computer terminal 11 may be used to display a larger image, thus further improving the input operation and visibility accordingly. Inthiscase,the personal computer terminal 11 is adapted to be able to download a file creation process program and a file transmission and receipt process program performed by the information processor 12 using an external storage medium, the programs being for the exclusive use of members.

Although this embodiment has been described with respect to a text data format, a simple binary data format such as image data and a combination of both text and binary data formats may be applied. Binary data includes a bit pattern that is more than the above character code system and that has any length (bit number).

As described above, the present invention provides an information processor for transmitting packets forming a file sent to a local communication line to a destination information processor through a selected one or more of a plurality of networks, the information processor preferably including: a transmission instruction unit for instructing a transmission of a transmission object file to a specifieddestination; a section data set creation unit for dividing the file instructed to be transmitted into a plurality of section data sets, each section data set having a predetermined data amount less than one-packet data amount; an allocation unit for allocating the section data sets to the networks according to a predetermined rule; a packet creation unit for connecting in series the section data sets allocated to each network as a section file, dividing the section file into a plurality of packets, and setting, in a predetermined region of each packet, packet identification information associated with the transmission object file; a network setting unit for setting, in a predetermined region of each packet, information specifying the network allocated by the allocation unit; and a transmission process unit for sending each packet having the network-specifying information set therein to the local communication line. According to this invention, a series of data sets forming a file is itself divided into section data sets, and the transmission lines of the section data sets are allocated to a plurality of networks, thereby improving security against information leakage.

According to the present invention, the information processor preferably includes a receipt process unit for receiving packets from the networks, and a rearrangement unit for rearranging the packets into the original one file according to the network-specifying information set in the predetermined region of each received packet and the predetermined rule. According to this configuration, the receiving end may perform the rearrangement process to reproduce the original file.

The allocation unit preferably allocates the section data sets such that adjacent section data sets are allocated to different networks according to the predetermined rule. According to this configuration, for data such as binary format data, adjacent data sets pass through different networks, so even if a file is captured in one of the networks, the contents remain unclear, thus blocking the leakage of secret.

The transmission process unit preferably sends the packets allocated to the networks by one-network packets at a time. This configuration may eliminate the complexity of switching the communication paths.

The transmission process unit preferably transmits, after it has transmitted the packets allocated to one network and when a predetermined condition is satisfied, the packets allocated to the other networks. According to this configuration, after one communication route situation is confirmed, the remaining packets are transmitted through a different route, thus increasing the transmission reliability.

The predetermined condition is preferably that a return signal is received from the destination information processor, the return signal showing that the processor has received the packets from the one network. According to this configuration, unless one network appropriateness is ensured, the remaining packets are not transmitted, thereby improving the communication reliability.

The file preferably includes text code data sets, each having a predetermined number of bytes. According to this configuration, the text data sets are divided into the section data sets, thus making it possible to change data to unclear information.

The section data set creation unit is preferably adapted to divide the file into the section data sets by dividing each text code data set at a point in the middle of its predetermined bytes. According to this configuration, each text data set is divided between the code data sets into the section data sets, thus making it possible to reliably change data to unclear information.

The networks may include the Internet and a dedicated network different from the Internet, the dedicated network being accessible only by one having the access right thereto. According to this configuration, even if the information being transmitted is captured on the Internet side, the entire of the transmission file remains unknown, thus blocking information leakage.

The present invention divides a series of data sets itself forming a file into a plurality of section data sets, and allocates transmission lines of the section data sets to a plurality of networks. This may improve security against information leakage due to such as capture of the transmission file.

## Claims

1. An information processor for transmitting packets forming a file sent to a local communication line to a destination information processor through a selected one or more of a plurality of networks, the information processor comprising:
a transmission instruction unit for instructing a transmission of a transmission object file to a specified destination;
a section data set creation unit for dividing the file instructed to be transmitted into a plurality of section data sets, each section data set having a predetermined data amount less than one-packet data amount;
an allocation unit for allocating the section data sets to the networks according to a predetermined rule;
a packet creation unit for connecting in series the section data sets allocated to each network as a section file, dividing the section file into a plurality of packets, and setting, in a predetermined region of each packet, packet identification information associated with the transmission object file;
a network setting unit for setting, in a predetermined region of each packet, information specifying the network allocated by the allocation unit; and
a transmission process unit for sending each packet having the network-specifying information set therein to the local communication line.

2. The information processor according to claim 1, further comprising a receipt process unit for receiving packets from the networks, and a rearrangement unit for rearranging the packets into the original one file according to the network-specifying information set in the predetermined region of each received packet and the predetermined rule.

3. The information processor according to claim 1 or 2, wherein
the allocation unit allocates the section data sets such that two adjacent section data sets are allocated to different networks according to the predetermined rule.

4. The information processor according to any of claims 1 to 3, wherein
the transmission process unit sends the packets allocated to the networks by one-network packets at a time.

5. The information processor according to claim 4,
wherein
the transmission process unit transmits, after it has transmitted packets allocated to one network and when a predetermined condition is satisfied, the packets allocated to the other networks.

6. The information processor according to claim 5,
wherein
the predetermined condition is that a return signal is received from the destination information processor, the return signal showing that the processor has received the packets from the one network.

7. The information processor according to any of claims 1 to 6, wherein
the file comprises text code data sets, each having a predetermined number of bytes.

8. The information processor according to claim 7,
wherein
the section data set creation unit is adapted to divide the file into a plurality of section data sets by dividing each text code data set at a point in the middle of its predetermined bytes.

9. The information processor according to any of claims 1 to 8, wherein
the networks comprise the Internet and a dedicated network different from the Internet, the dedicated network being accessible only by one having the access right thereto.

10. A method of controlling communication of an information processor for transmitting packets forming a file sent to a local communication line to a destination information processor through a selected one or more of a plurality of networks, the method comprising:
a transmission instruction step for instructing a transmission of a transmission object file to a specified destination;
a section data set creation step for dividing the file instructed to be transmitted into a plurality of section data sets, each section data set having a predetermined data amount less than one-packet data amount;
an allocation step for allocating the section data sets to the networks according to a predetermined rule;
a packet creation step for connecting in series the section data sets allocated to each network, dividing the connected data sets into a plurality of packets, and setting, in a predetermined region of each packet, packet identification information associated with the transmission object file;
a network setting step for setting, in a predetermined region of each packet, information specifying the network allocated by the allocation step; and
a transmission process step for sending each packet having the network-specifying information set therein to the local communication line.

11. The method of controlling communication of the information processor according to claim 10, further comprising, a receipt process step for receiving packets from the networks, and a rearrangement step for rearranging the packets into the original one file according to the network-specifyinginformation set in the predetermined region of each received packet and the predetermined rule.
